# EUROPÄISCHE PATENTSCHRIFT

(11) **EP 3 053 443 B1**
(45) Veröffentlichungstag und Bekanntmachung des Hinweises auf die Patenterteilung: **11.04.2018**
(21) Anmeldenummer: 15153594.5
(22) Anmeldetag: 03.02.2015
(51) Int. Cl.: B65G 47/84, A22C 11/00, B65G 47/08

(54) **Wurstgruppierer und Verfahren zum Gruppieren von Würsten zu Wurstgruppen**
Sausage grouper and method for grouping sausages into sausage groups
Dispositif de regroupement de saucisses et procédé destiné à regrouper des saucisses dans des groupes de saucisses

(43) Veröffentlichungstag der Anmeldung: 10.08.2016
(73) Patentinhaber: Albert Handtmann Maschinenfabrik GmbH & Co. KG, 88400 Biberach (DE)
(72) Erfinder: Willburger, Peter, 88255 Baindt (DE); Fuergut, Michael, 88400 Biberach (DE); Heim, Michael, 88400 Biberach (DE)
(74) Vertreter: Grünecker Patent- und Rechtsanwälte PartG mbB

(56) Entgegenhaltungen:
- EP-A1- 2 799 349
- EP-A2- 0 749 917
- WO-A2-2014/207682
- DE-A1-102007 054 956
- FR-A1- 2 882 547
- US-A1- 2011 124 276
- US-A1- 2014 106 654

## Beschreibung

Die Erfindung betrifft ein Verfahren zum Gruppieren von Würsten zu Wurstgruppen gemäß Anspruch 1.

Ein Wurstgruppierer und ein Verfahren gemäß den Oberbegriffen der Ansprüche 1 und 10 ist bereits aus der US2011/0124276A1 bekannt. Dabei sind Aufstauelemente vorgesehen, die über ein gemeinsames Antriebsmittel angetrieben werden.

Aus der US2014/0106654A1 ist ebenfalls ein Wurstgruppierer bekannt, bei dem in Längsrichtung antransportierte Würste in Aussparungen einer drehbaren Trommel aufgenommen und in den Aussparungen mitgenommen und in Behältnisse auf einem zweiten Band gruppenweise abgegeben werden, wobei sich das zweite Band senkrecht zum ersten Band bewegt.

Die WO2014/207682A2 betrifft keinen Wurstgruppierer, sondern eine Gruppiereinrichtung zum Erzeugen einer Reihe von Produkten in einer Packmaschine. Die Vorrichtung zeigt bereits Aufstauelemente zum Vereinzeln der Produkte und Aufstauelemente zum Gruppieren. Die Größe und Anordnung der Aufstauelemente ist jedoch nicht geeignet, zum Gruppieren von Würsten, die stets eine gewisse Krümmung aufweisen und einen runden Durchmesser.

Die US2008/0264736 beschreibt keinen Wurstgruppierer, aber eine Einrichtung zum Gruppieren von Produkten, mit Aufstauelementen, die jedoch nicht hintereinander unabhängig voneinander angetrieben werden, sondern parallel zueinander angeordnet sind.

Bei der vollautomatischen Verarbeitung von einzelnen oder zusammenhängenden Wurstportionen, z. B. bei der Zuführung von Verpackungseinrichtung, ist es häufig erforderlich, die einzelnen oder z. B. paarweise zusammenhängenden Würste, die quer zu ihrer Längsachse auf einem Transportband voneinander beabstandet transportiert werden, zu Gruppen mit vorbestimmter Anzahl von Portionen zusammenzuführen und als vollständige Gruppen weiter zu befördern, z. B. zu einer Verpackungsmaschine. Bisher wird dies dadurch erreicht, dass ein quer zur Transportrichtung beweglicher Stauschieber vor die erste Portion oder in die Lücke zwischen zwei Portionen ortsfest positioniert wird und die nachfolgende Portion solange stoppt und aufstaut, bis die gewünschte Anzahl Portionen einer Gruppe aufgestaut ist. Dann wird die Gruppe wieder freigegeben und weitertransportiert. Der Stauschieber wird dann wieder in die Lücke zwischen der letzten Wurst der zu erzeugenden Gruppe und der nachfolgenden ersten Wurst der nachfolgenden nächsten Gruppe positioniert.

Im Stand der Technik kommt es jedoch immer wieder dazu, dass sich die runden Würste - gerade oder gekrümmt - beim Aufschieben drehen, aneinander reiben und deshalb übereinander rollen, so dass die Wurstgruppe nicht mehr einlagig, sondern unkontrolliert mehrlagig ist. Auch beim Entfernen des Stauschiebers kommt es dazu, dass die Würste einer Wurstgruppe nicht korrekt ausgerichtet bleiben.

Hiervon ausgehend liegt der vorliegenden Erfindung die Aufgabe zugrunde, ein Verfahren bereitzustellen; das auf zuverlässige und einfache- Art und Weise ein Gruppieren von Würsten zu Wurstgruppen erlauben.

Erfindungsgemäß wird diese Aufgabe durch die Merkmale des Anspruchs 1 gelöst.

Ein Wurstgruppierer zum Gruppieren von Würsten zu Wurstgruppen mit einer vorbestimmten Anzahl von Würsten geeignet zum Durchführen des erfindungsgemäßen Verfahrens weist eine Transporteinrichtung zum Transportieren der Würste auf, die voneinander einen Abstand aufweisen. Eine entsprechende Transporteinrichtung kann beispielsweise ein Transportband sein. Darüber hinaus ist mindestens ein Aufstauelement vorgesehen zum Aufstauen der Würste, d. h., dass die Würste an dem Aufstauelement vom Transportband derart zusammengeschoben werden, dass sie nicht mehr voneinander beabstandet sind. Vorteilhafterweise ist das mindestens eine Aufstauelement derart ausgebildet, dass es zum Gruppieren in Transportrichtung T der Transporteinrichtung bewegbar ist, d. h., sich zusammen mit der Transporteinrichtung in Transportrichtung T bewegen kann. Dadurch, dass das Aufstauelement in Transportrichtung bewegbar ist, kann die Geschwindigkeitsdifferenz zwischen Aufstauelement und Transporteinrichtung reduziert oder ganz aufgehoben werden. Dadurch kann eine hohe Reibung zwischen der Oberfläche der Transporteinrichtung und der Wurstoberfläche, bzw. Auflagefläche der Wurst, verhindert werden, so dass sich die Würste beim Aufstauen nicht mehr drehen, nicht aneinander reiben und auch nicht mehr übereinander rollen, so dass einlagige exakte Wurstgruppen hergestellt werden können.

Die Größe der Wurstgruppen, d. h. die Anzahl der Würste pro Gruppe kann auch während des Betriebs verändert werden.

Außerdem müssen die Würste nach dem Gruppieren nicht aus dem Stillstand auf Geschwindigkeit der Transporteinrichtung beschleunigt werden, so dass ein Auseinanderrollen der Würste verhindert werden kann. Zudem ergibt sich der Vorteil, dass nach dem Gruppieren, wenn die Wurstgruppe wieder auf die Transporteinrichtungsgeschwindigkeit gebracht wird, die Würste durch das mindestens eine Aufstauelement gestützt und somit in Position gehalten werden.

Vorteilhafterweise weist der Wurstgruppierer mindestens zwei unabhängig voneinander antreibbare Aufstauelemente auf. Dadurch, dass die Aufstauelemente unabhängig voneinander antreibbar sind, können aufeinanderfolgende Aufstauelemente, d. h. beispielsweise ein erstes Aufstauelement, das sich in Transportrichtung vor der ersten Wurst einer Wurstgruppe befindet und ein Aufstauelement, das sich in Transportrichtung betrachtet hinter der letzten Wurst einer Wurstgruppe befindet, mit unterschiedlichen Geschwindigkeiten angetrieben werden, derart, dass ein vorderes Aufstauelement die Würste bremst und ein hinteres Aufstauelement die Würste in Transportrichtung aufschiebt. Dazu ist vorzugsweise ein erstes Antriebsmittel vorgesehen, für mindestens ein erstes Aufstauelement und ein zweites Antriebsmittel für mindestens ein zweites Aufstauelement. Dabei können das erste und zweite Aufstauelement jeweils abwechselnd nacheinander zwischen die Würste an den jeweiligen Wurstgruppengrenzen eingebracht werden.

Das erste und/oder zweite Antriebsmittel weisen ein umlaufendes Förderteil, beispielsweise einen umlaufenden Riemen auf, an dem das entsprechende mindestens eine Aufstauelement angeordnet, d. h. montiert, ist. Das heißt, dass der Wurstgruppierer ein Riemensystem umfasst, das mindestens zwei parallel verlaufende Riemen aufweist, an denen jeweils mindestens ein Aufstauelement befestigt ist. Es können insbesondere auch mehrere Aufstauelemente an jeweils einem umlaufenden Förderteil, d. h. insbesondere Riemen, montiert sein. Ein entsprechender Aufbau ist einfach und kostengünstig zu realisieren.

Das mindestens eine Aufstauelement kann beim Gruppieren bei seiner Bewegung in Transportrichtung beabstandet zur Oberfläche laufen. Vorzugsweise ist beispielsweise das Förderteil oder der Riemen so angeordnet, dass es parallel zur Transporteinrichtung läuft. Wenn das Aufstauelement die Oberfläche der Transporteinrichtung nicht berührt, gibt es keine Reibungsverluste zwischen Aufstauelement und Transporteinrichtung und das Aufstauelement kann sich frei auf seiner Umlaufbahn bewegen.

Die Transporteinrichtung ist z. B. als Staurollenband ausgebildet. Dadurch kann die Reibung zwischen den Würsten bzw. Wurstgruppen und der Transporteinrichtung noch weiter verringert werden. Bei einem Staurollenband handelt es sich um eine umlaufende geschlossene Kette, die mit frei drehbaren Rollen bestückt ist, auf denen die Würste aufliegen. Werden die Würste angehalten bzw. durch das Aufstauelement gebremst, so bewegt sich die Kette weiter und die Rollen drehen sich unter den Würsten.

Es ist vorteilhaft, wenn der Wurstgruppierer eine Steuereinrichtung sowie eine Sensoreinrichtung umfasst, wobei die Sensoreinrichtung eine antransportierte Wurst erkennen kann und ein entsprechendes Signal an die Steuereinrichtung senden kann. Somit sind die Positionen der antransportierten Würste in Abhängigkeit der Zeit bekannt, da auch die Transportgeschwindigkeit der Transporteinrichtung bekannt ist.

Die Steuereinrichtung kann also die Positionen der aufeinanderfolgenden antransportierten Würste berechnen. Es ist jedoch auch möglich, dass die Position nicht über das vom Sensor erzeugte Signal berechnet werden, sondern dass die Steuerung diese Positionen aus vorhergehenden Prozessschritten kennt und daraus resultierend weitere Behandlungsschritte errechnet und einleitet. Folglich kann ein entsprechendes Aufstauelement exakt zwischen der letzten Wurst einer ersten Gruppe und der ersten Wurst einer nachfolgenden Gruppe eingreifen. Das heißt, dass die Antriebsmittel in Abhängigkeit des Gruppierungsauftrags angesteuert werden können, d. h. in Abhängigkeit des Wurstkalibers, des Abstands der Würste und der Anzahl der Würste in einer Wurstgruppe.

Die Steuerung derart ausgelegt, dass die Aufstauelemente dabei jeweils mit variierender Geschwindigkeit antreibbar, d. h. dass, wenn die Aufstauelemente umlaufend ausgebildet sind, die Geschwindigkeit während eines Umlaufs nicht konstant ist. Somit kann die Geschwindigkeit des jeweiligen Aufstauelements exakt an den jeweiligen Prozessschritt beim Gruppieren angepasst werden.

Es ist vorteilhaft wenn die umlaufenden Förderteile insbesondere Riemen, um mehr als zwei Räder, insbesondere um drei Räder laufen, wobei vorzugsweise die Länge I des Abschnitts der Förderteile, in dem sich die Aufstauelemente parallel zur Transporteinrichtung bewegen können eingestellt werden kann, indem die Position von mindestens zwei Rädern veränderbar ist.

Wenn zwei der Räder verstellbar sind, kann die aktive Länge I eingestellt werden, ohne dass ein neues umlaufendes Förderteil, d. h. ein anderer Riemen mit einer anderen Länge eingesetzt werden muss. Dies ist besonders vorteilhaft.

Bei dem erfindungsgemäßen Verfahren nach Anspruch 1 zum Gruppieren von Würsten in Gruppen mit einer vorbestimmten Anzahl von Würsten werden zueinander beabstandete Würste quer zu ihrer Längsrichtung auf einer Transporteinrichtung gefördert und mit mindestens einem Aufstauelement aufgestaut. Das heißt, dass dabei der Abstand der beabstandeten Würste bis auf Null reduziert wird oder die Würste sogar noch etwas zusammengepresst werden. Gemäß der Erfindung wird zum Gruppieren das mindestens eine Aufstauelement zumindest zeitweise in Transportrichtung bewegt.

Dabei werden zumindest zwei unabhängig voneinander angetriebene Aufstauelemente verwendet, die die Würste gruppieren.

Bei dem erfindungsgemäßen Verfahren wird vorzugsweise ein erstes Aufstauelement vor der ersten Wurst einer Wurstgruppe eingebracht und bewegt sich zumindest zeitweise mit einer Geschwindigkeit von V₁ < V_{Transporteinrichtung}. Gemäß einer bevorzugten Ausführungsform wird ein nachfolgendes zweites Aufstauelement hinter der letzten Wurst der zu erzeugenden Wurstgruppe eingebracht und bewegt sich zumindest zeitweise mit einer Geschwindigkeit V₂ > V_{Transporteinrichtung}, wobei V_{Transporteinrichtung} der Geschwindigkeit der Transporteinrichtung, mit der Würste transportiert werden, entspricht.

Das bedeutet, dass von einem ersten Aufstauelement die Würste aufgestaut, d.h. gebremst werden können, während von einem nachfolgenden Aufstauelement die Würste in Transportrichtung aufgeschoben werden können, derart, dass sich der Abstand zwischen den Würsten verringert. Wenn zur Gruppierung zwei Aufstauelemente verwendet werden, zwischen denen sich die Würste befinden, muss das vordere Aufstauelement die Würste nicht so stark abbremsen, so dass die Geschwindigkeitsdifferenz zwischen abgebremster Wurst und Transportgeschwindigkeit der Transporteinrichtung verringert werden kann. Außerdem können die Würste zwischen den beiden Aufstauelementen sicher in Position gehalten werden.

Wenn bei dem erfindungsgemäßen Verfahren der Abstand zwischen dem ersten und zweiten Aufstauelement etwa dem Produkt aus Wurstkaliber und Wurstanzahl pro Wurstgruppe entspricht, kann die Geschwindigkeit V₁, V₂ der beiden Aufstauelemente auf die Geschwindigkeit V_{Transporteinrichtung} der Transporteinrichtung eingestellt werden, d. h., dass die Würste durch die beiden Aufstauelemente gehalten und gleichzeitig wieder auf Transportgeschwindigkeit gebracht werden. Somit kann wirksam verhindert werden, dass die Würste beim Beschleunigen auf Bandgeschwindigkeit auseinanderrollen. Während dieser Synchronfahrt kann sich die Wurstgruppe stabilisieren und beruhigen. Die Wurstgruppe wird kompakt zusammengehalten.

Nachdem die Wurstgruppe erzeugt wurde, insbesondere nach der Synchronfahrt, kann das erste Aufstauelement, das sich in Transportrichtung betrachtet vor der ersten Wurst der Gruppe befindet, mit einer Geschwindigkeit V₁ > V_{Transportiereinrichtung} bewegt werden und somit aus dem Bereich, den die Wurstgruppen durchfahren, herausgefahren werden. Somit kann sich also das vordere Aufstauelement von der Wurstgruppe wegbewegen und die Wurstgruppe freigeben.

Das zweite nachfolgende Aufstauelement, das sich hinter der letzten Wurst der Wurstgruppe befindet, kann dann auf eine Geschwindigkeit V₂ < V_{Transporteinrichtung} gebremst werden, um eine weitere nachfolgende Wurstgruppe durch Aufstauen zu erzeugen. Es ist sogar möglich, dass die Geschwindigkeit des Aufstauelements hierbei so stark verringert wird, dass, bevor das Aufstauelement in Kontakt mit der ersten Wurst der nachfolgenden Wurstgruppe kommt, stillsteht, oder aber entgegen der Transportrichtung T bewegt wird. Sobald das Aufstauelement jedoch in Kontakt mit der ersten Wurst der nachfolgenden Wurstgruppe kommt, bewegt es sich ebenfalls in Transportrichtung T um die Geschwindigkeitsdifferenz zwischen Wurst und Transporteinrichtung gering zu halten. Das bedeutet, dass das zweite hintere Aufstauelement, zum Erzeugen der ersten Wurstgruppe, als vorderes Aufstauelement der nachfolgenden Gruppe verwendet werden kann. Dies macht einen kontinuierlichen Prozess möglich.

Die Erfindung wird nachfolgend unter Bezugnahme folgender Figuren näher erläutert.
- Fig. 1: zeigt schematisch einen Schnitt durch eine mögliche Ausführungsform eines Wurstgruppierers geeignet zum Durchführen des Verfahrens gemäß der vorliegenden Erfindung.
- Fig. 2: zeigt grob schematisch eine Seitenansicht von rechts auf die Fig. 1, in einer Position, in der sich ein erstes und zweites Aufstauelement in Vertikalrichtung im Wesentlichen gegenüberliegen.
- Fig. 3a, b, c: zeigen die unterschiedlichen Phasen eines Ausführungsbeispiels eines Verfahrens gemäß der vorliegenden Erfindung.
- Fig. 4: zeigt grob schematisch die Steuerung geeignet für ein Verfahren gemäß der vorliegenden Erfindung.

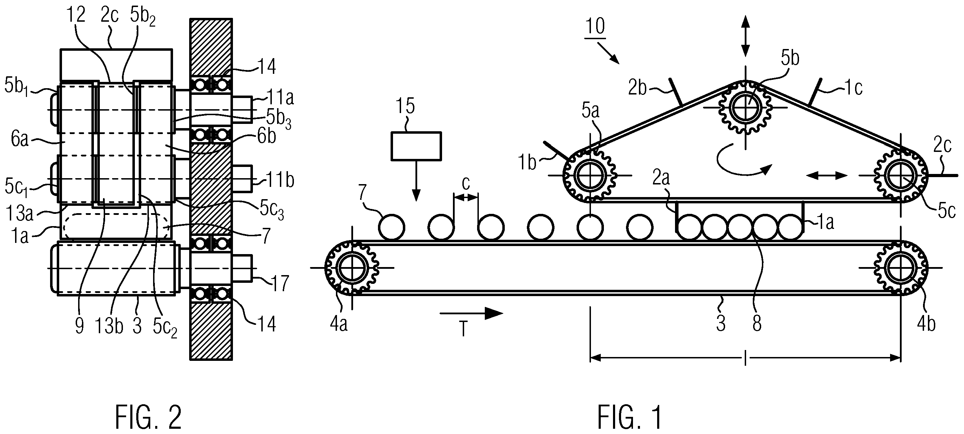

Fig. 1 zeigt eine mögliche Ausführungsform eines Wurstgruppierers 10 geeignet für ein Verfahren gemäß der vorliegenden Erfindung.

Der Wurstgruppierer zum Gruppieren von Würsten 7 zu Wurstgruppen 8 mit einer vorbestimmten Anzahl von Würsten, in diesem Fall z.B. fünf Würsten, weist eine Transporteinrichtung 3 auf, auf der die Würste quer zu ihrer Längsrichtung und quer zur Transportrichtung T liegend transportiert werden. Hier ist die Transporteinrichtung 3 ein umlaufendes Förderband, das um zwei Räder 4a, 4b umläuft, wobei z. B. das Rad 4b über eine Antriebswelle 17 (Fig. 2) angetrieben werden kann. Die Würste 7 werden beispielsweise von einer vorhergehenden Vorrichtung antransportiert und sind voneinander beabstandet. Insbesondere weisen die Würste einen Abstand c zueinander auf, der mindestens so groß ist, dass sich ein Aufstauelement zwischen zwei benachbarte Würste einbringen lässt. Üblicherweise entspricht der Abstand c zwischen zwei Würsten dem Wurstkaliber, d. h. dem Durchmesser der Wurst ± 5 % bis 100 %. Die Abstände zwischen den Würsten können auch variabel sein, insbesondere bei kurzen Produktionsunterbrechungen, wobei es auch möglich ist, dass sich aufeinanderfolgende Abstände voneinander unterscheiden.Darüber hinaus weist der Wurstgruppierer 10 zum Erzeugen der Wurstgruppen 8 mindestens ein Aufstauelement 1a, 1b, 1c, 2a, 2b, 2c auf, in diesem Ausführungsbeispiel z. B. sechs Aufstauelemente 1a, 1b, 1b, 2a, 2b, 2c.

Wie insbesondere in Kombination aus den Fig. 1 und 2 hervorgeht, weist diese Vorrichtung zwei unabhängige Antriebsmittel auf, die umlaufende Förderteile, hier in Form von umlaufenden Riemen, aufweisen, an denen jeweils mehrere- hier drei Aufstauelemente befestigt sind. Wie insbesondere aus der Fig. 2 hervorgeht, ist ein Riemensystem vorgesehen, aus drei parallel zueinander angeordneten Riemen. Die beiden äußeren Riemen 6a, 6b werden synchron hier von der Antriebswelle 11b und z.B. die Antriebsräder 5c1, 5c3 angetrieben - wobei der Antrieb einen nicht dargestellten Antriebsmotor umfasst. Wie aus Fig. 2 hervorgeht, ist ein Aufstauelement 1a über die Verbindungsstellen 13a und 13b mit den Riemen bzw. Bändern 6a und 6b verbunden. Das Aufstauelement 1a wird somit über die Riemen 6a, 6b auf einer geschlossenen Bahn bewegt. Die Riemen 6a, 6b laufen darüber hinaus über die entsprechenden Umlenkräder der Räderanordnung 5a und 5b. Auf den Riemen 6a, 6b sind in diesem Ausführungsbeispiel insgesamt drei Aufstauelemente 1a, 1b, 1c befestigt, die gleichmäßig um den Umfang verteilt sind. Die Aufstauelemente 1a, 1b, 1c sind, wie insbesondere aus Fig. 2 deutlich wird, nicht mit dem umlaufenden Riemen 9 verbunden. Der Riemen 9 läuft ebenfalls über entsprechende mittlere Räder bzw. Rollen der Räderanordnung 5a, 5b, 5c. Der mittlere Riemen 9 wird z.B. über die Antriebswelle 11a und das Riemenrad 5b2 angetrieben. Die Umlenkräder bzw. Rollen 5b1 , 5b3 auf denen die Riemen 6a, 6b laufen, werden hier nicht von der Welle 11a angetrieben. Der Riemen 9 weist hier ebenfalls drei Aufstauelemente 2a, 2b, 2c auf, die gleichmäßig um den Umfang des Riemens 9 verteilt sind. Die Riemenräder für die Riemen 6a, 6b und den Riemen 9 in den Räderanordnungen 5a, 5b, 5c sind hier koaxial angeordnet. Dies ist jedoch nicht zwingend notwendig. Es ist sogar möglich, dass die Transportbänder 6a, 6b und das Transportband 9 nicht die gleiche Länge aufweisen. Wesentlich ist nur, dass die Abstandselemente 1a, 1b, 1c unabhängig von den Aufstauelementen 2a, 2b, 2c angetrieben werden können und Aufstauelemente, die aufeinanderfolgend zwischen die Wurstgruppen eingebracht werden unabhängig voneinander angetrieben werden können.

In dieser Vorrichtung sind die Aufstauriemen 6a, 6b sowie 9 parallel zur Transporteinrichtung 3 angeordnet. Der Abstand ist so gewählt, dass die Aufstauelemente 1a, 1b, 1c, 2a, 2b, 2c die Transporteinrichtung 3 nicht berühren.

Wenn auch nicht mehr dargestellt, wäre es auch möglich, dass jedes einzelne Aufstauelement 1a, 1b, 1c, 2a, 2b, 2c seinen eigenen Antrieb aufweist, insbesondere seinen eigenen Riemen.

Da von jedem umlaufenden Förderteil, hier den beiden Riemen 6a, 6b und dem Riemen 9 immer nur ein Aufstauelement in Eingriff sein darf, ist es vorteilhaft, wenn die Riemen nicht nur um zwei Riemenräder laufen, sondern im Dreieck um drei Riemenräder wobei durch Verstellen von mindestens zwei Riemenräder, die zur Gruppenbildung aktive Länge l des Riemen beeinflusst werden kann.

Die aktive Länge l des Förderteils, in der sich die Aufstauelemente parallel zur Transporteinrichtung 3 bewegen können, kann also verstellt werden. Hier kann also der Riemenabschnitt, der sich parallel zur Oberfläche der Transporteinrichtung 3 erstreckt, auf eine bestimmte Länge l in Abhängigkeit eines bestimmten Gruppierungsauftrags eingestellt werden. Dazu können mindestens zwei der Antriebs- oder Umlenkräder der Räderanordnungen 5a, 5b, 5c für das entsprechende umlaufende Förderteil, hier Förderriemen, in ihrer Position verstellt werden -insbesondere wie in Fig. 1 durch die Pfeile dargestellt ist in Vertikal- und/oder Horizontalrichtung. Wenn zwei der Räder verstellbar sind, kann die aktive Länge l eingestellt werden, ohne dass ein neues umlaufendes Förderteil, d. h. ein anderer Riemen mit einer anderen Länge eingesetzt werden muss. Dies ist besonders vorteilhaft.

Ein Verstellmechanismus ist beispielsweise so realisiert, dass, wie in Fig. 1 angedeutet, die Achse, auf der das Rad 5c befestigt ist, gemäß dem Pfeil horizontal einstellbar gestaltet ist, und um die Riemenspannung wieder herzustellen die Achse, auf der das Rad 5b gelagert ist, vertikal und/oder horizontal nachgestellt wird.

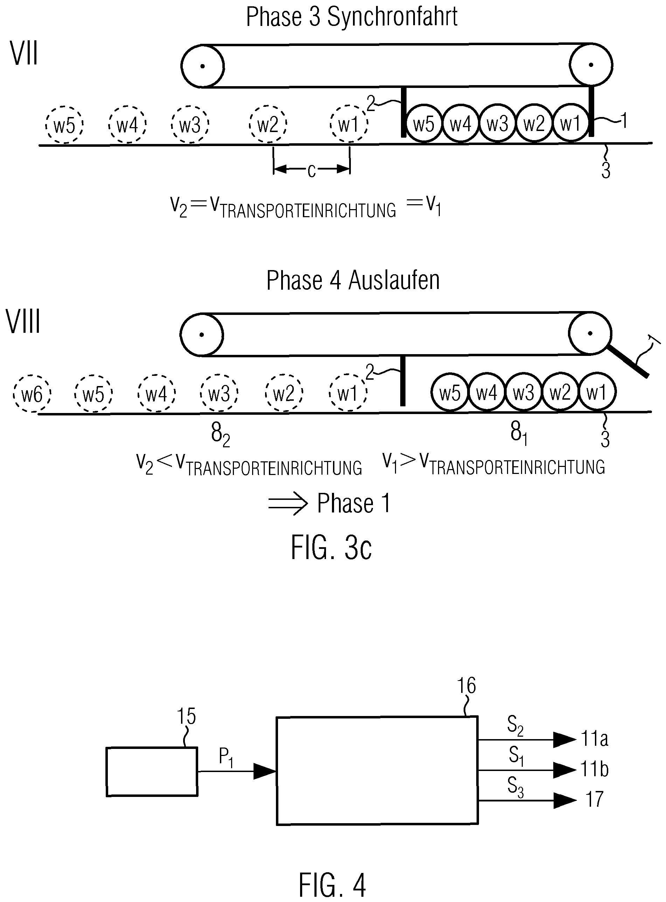

Die Vorrichtung weist weiter einen Sensor 15 auf, beispielsweise einen optischen Sensor, der eine ankommende Wurst detektiert und ein entsprechendes Signal P1, wie aus der Fig. 4 hervorgeht, an eine Steuereinrichtung 16 leitet. Die Steuerung berechnet daraus im Folgenden die Positionen der einzelnen Würste 7. Das heißt, dass die Steuereinrichtung 16, nachdem auch die Geschwindigkeit der Transporteinrichtung 3 bekannt ist, genau berechnen kann, wann ein Aufstauelement 1a, 1b, 1c, 2a, 2b, 2c zwischen zwei aufeinanderfolgenden Einzelwürsten 7 eingeführt werden soll. Die Steuereinrichtung 16 sendet entsprechende Signale S1, S2 an die Antriebe, d. h. Antriebsmotoren, die dann beispielsweise die Wellen 11a, 11b antreiben. Die Steuereinrichtung steuert dann die Antriebsmittel für die Aufstauelemente in Abhängigkeit des Wurstkalibers, des Abstands der Würste 7 und der Anzahl der Würste in einer Gruppe.

Es ist auch möglich, dass die Steuerung 16 die Positionen der Würste nicht über das Sensorsignal P1 bestimmt, sondern dass die Steuerung 16 diese Positionen aus früheren vorhergehenden Prozessschritten kennt und daraus resultierend die weiteren Behandlungsschritte berechnet und einleitet.

Die Aufstauelemente können als Aufstaubleche ausgebildet sein, wie beispielsweise in Fig. 2 gezeigt ist. Sie können jedoch auch als Nocken oder mehrere nebeneinander angeordneten Stiften ausgebildet sein. Ferner können die Aufstauelemente auch der Kontur einer gekrümmten Wurst angepasst sein. Die Aufstauriemen können, wie dargestellt, oberhalb der Oberfläche der Transporteinrichtung 3 angeordnet sein. Sie können jedoch auch seitlich oder unterhalb der Transportbandfläche angeordnet sein und von dort zwischen die Würste eingreifen. Wenn die Aufstauriemen von unten eingreifen, muss das Transportband 3 zwangsläufig aus mehreren beabstandeten parallel zueinander angeordneten Einzelriemen bestehen, zwischen denen die mehrteilig ausgebildeten Aufstauelemente hindurchreichen können.

Um die Reibung zwischen den Würsten 7 und der Transporteinrichtung 3 noch weiter zu verringern, kann die Transporteinrichtung als Staurollenband ausgeführt sein. Dabei handelt es sich um eine umlaufende geschlossene Kette, die mit frei drehbaren Rollen bestückt ist, auf denen die Würste aufliegen. Wird die Wurst aufgestaut, so bewegt sich die Kette weiter und die Rollen drehen sich unter den Würsten.

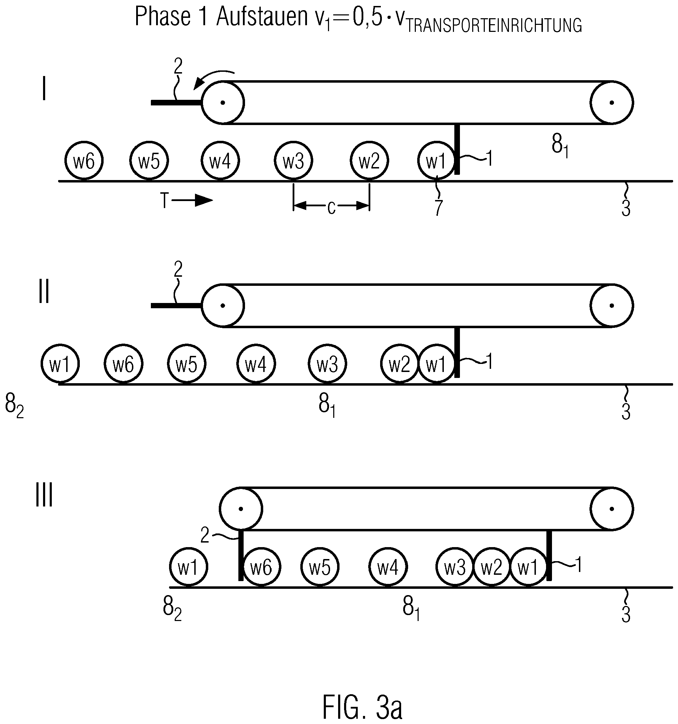

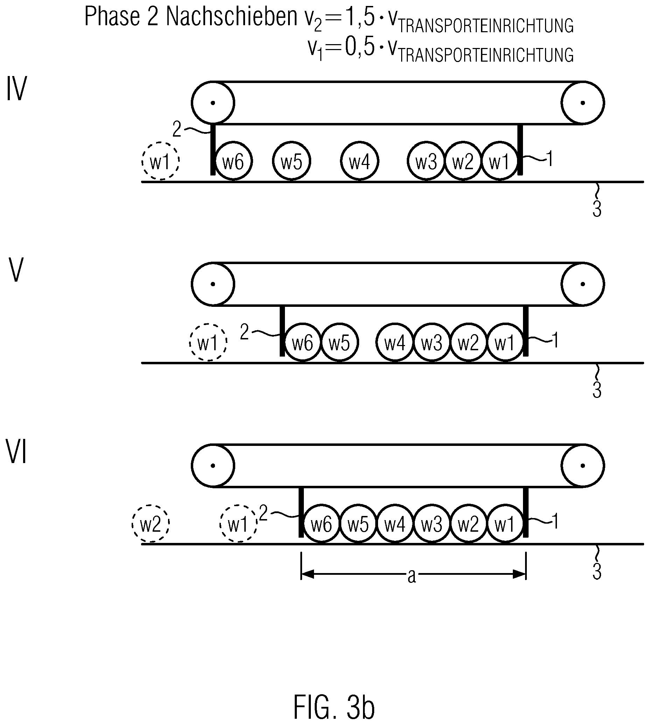

Nachfolgend wird unter Bezugnahme der Fig. 3a, b, c eine Ausführungsform des erfindungsgemäßen Verfahrens näher erläutert.

Bei diesem Ausführungsbeispiel sollen z.B. sechs Würste 7 (W1-W6) zu einer Wurstgruppe zusammengefasst werden. Die auf der Transporteinrichtung 3 angeförderten Einzelwürste haben beispielsweise ein Kaliber von 10 mm bis 45 mm und einen Abstand c von 10 mm bis 100 mm zueinander. Die Geschwindigkeit der Transporteinrichtung V_{Transporteinrichtung} liegt beispielsweise in einem Bereich von 30 mm/s bis 1000 mm/s.

Einfachheitshalber wird das Verfahren anhand von zwei Antriebsmitteln mit jeweils einem Aufstauelement 1 und 2 erläutert, die unabhängig voneinander angetrieben werden können. Zunächst erfolgt in der ersten Phase 1 (Fig. 3a) ein Aufstauen. Die einlaufenden Würste 7 bewegen sich bei ihrem Transport auf der Transporteinrichtung 3 auf das erste Aufstauelement 1 zu, das sich mit einer kleineren Geschwindigkeit V₁ < V_{Transporteinrichtung} bewegt, wie in I dargestellt ist. Bei diesem Ausführungsbeispiel ist V₁ = 0,5 x V_{Transporteinrichtung}. Allgemein kann die Geschwindigkeit V₁ zwischen 0 und 99 % vorzugsweise in einem Bereich von 20 % bis 80 % der Geschwindigkeit V_{Transporteinrichtung} liegen. Durch die Geschwindigkeitsdifferenz ΔV = V_{Transport} - V₁ bewegt sich die erste Wurst W1 der Wurstgruppe 8₁ auf das Aufstauelement 1 zu und die Lücken zwischen den Würsten verringern sich während des Transports nacheinander, wie insbesondere aus II hervorgeht. Sollte bei der Zuführung der Würste eine größere Lücke entstehen, so kann die Geschwindigkeit des Aufstauelementes 1 auch bis zum Stillstand verringert werden, bis wieder eine Wurst zur Vervollständigung der Wurstgruppe zur Verfügung steht. Nach einer vorbestimmten Anzahl an Einzelwürsten 7, hier sechs Würsten, die zu einer Wurstgruppe zusammengeführt werden sollen, wird das zweite Aufstauelement 2, das von einem anderen Antrieb angetrieben wird, und hier beispielsweise auf einem anderen Riemen umläuft, in die Lücke zwischen der letzten Wurst W6 der ersten Wurstgruppe und der nachfolgenden Wurst W1 eingeführt, hier eingeschwenkt.

Die Größe der Wurstgruppen, d. h. die Anzahl der Würste pro Gruppe kann auch während des Betriebs verändert werden, so dass beispielsweise abwechselnd Wurstgruppen bestehend aus 5 und 7 Würsten produziert werden.

Wenn wie aus III hervorgeht, das Aufstauelement 2 in der Lücke zwischen W6 und W1 positioniert ist erfolgt Phase 2 (Fig. 3b), d.h. das Nachschieben. Hier wird das Aufstauelement 2 mit einer Geschwindigkeit V₂ bewegt, die größer ist als V_{Transporteinrichtung} , wobei vorzugsweise V₂ in einem Bereich zwischen 100 % und 200 % der Geschwindigkeit V_{Transporteinrichtung} liegt, wie aus IV hervorgeht. Bei diesem Ausführungsbeispiel bewegt sich das erste Aufstauelement 1 immer noch mit einer kleineren Geschwindigkeit als die Transporteinrichtung, während sich das zweite Aufstauelement 2 mit einer größeren Geschwindigkeit als die Transporteinrichtung 3 bewegt. Dadurch werden die hinteren Würste W6, W5, wie beim Vergleich von IV und V hervorgeht, in Transportrichtung zu den vom ersten Aufstauelement 1 aufgestauten Würsten W1 bis W4 geschoben.

Die Aufstauelemente 1 und 2 führen eine entsprechende Bewegung durch, bis der Abstand der beiden Aufstauelemente 1, 2, dem Produkt aus Wurstkaliber und Wurstanzahl pro Gruppe entspricht, d. h. hier, die Abmessung a annimmt - siehe VI.

Nach Beenden des Nachschiebens erfolgt die Phase 3 (Fig. 3c), nämlich eine Synchronfahrt, wie aus VII hervorgeht. Die zu einer kompakten Wurstgruppe zusammengeführten Würste sollen dann wieder auf V_{Transporteinrichtung} gebracht werden. Daher wird die Geschwindigkeit V₁, V₂ der beiden Aufstauelemente 1, 2 und damit die Geschwindigkeit der vollständigen Wurstgruppe an die Transportgeschwindigkeit V_{Transporteinrichtung} der Transporteinrichtung 3 angeglichen, so dass sich die erzeugte Wurstgruppe mit V_{Transporteinrichtung} weiterbewegt. Die Aufstauelemente 1,2 werden eine vorbestimmte Strecke mit V_{Transporteinrichtung} weiterbewegt, damit sich die Wurstgruppe beruhigt und die eingeleitete Beschleunigung keine Auswirkung mehr auf das Verhalten der Wurstgruppe ausübt. So können die Würste eine exakte Position beibehalten.

Anschließend folgt die Phase 4 (Fig. 3c), nämlich das Auslaufen der Wurstgruppe. Dazu wird das vorauslaufende Aufstauelement 1 mit erhöhter Geschwindigkeit bewegt, derart, dass V₁ > V_{Transporteinrichtung}, vorzugsweise V₁ = 105 % bis 200 % der V_{Transporteinrichtung}. Gleichzeitig wird die Geschwindigkeit des nachfolgenden Aufstauelements 2 reduziert auf V₂ < V_{Transporteinrichtung} oder vollständig gestoppt, wobei dieses Aufstauelement 2 dann die Aufstaufunktion entsprechend dem ersten Aufstauelement 1 zur Erzeugung der ersten Wurstgruppe 8₁ (siehe II) übernimmt. Es ist auch möglich, dass dieses Aufstauelement der ersten Wurst W1 der nächsten Gruppe 8₂ noch ein Stück entgegenfährt, also in entgegengesetzte Transportrichtung T. Wenn jedoch die erste Wurst W1 der zweiten Wurstgruppe 8₂ in Kontakt mit dem Aufstauelement 2 kommt, bewegt sich dieses bereits mit einer Geschwindigkeit in Transportrichtung, die jedoch wiederum kleiner als die Geschwindigkeit V_{Transporteinrichtung} ist. Der Vorgang beginnt nun von Neuem und nach einer bestimmten Anzahl an Würsten, hier sechs Würsten, wird dann ein nachfolgendes Aufstauelement, das unabhängig von dem vorauslaufenden Aufstauelement angetrieben wird, wieder in die Lücke zwischen der letzten Wurst W6 der Gruppe 8₂ und der ersten Wurst W1 der nächsten Gruppe eingeführt wird, wie zuvor beschrieben wurde. Dazu kann beispielsweise das Aufstauelement 1 sehr schnell mit erhöhter Geschwindigkeit in die entsprechende Position gebracht werden, oder aber ein beispielsweise auf dem gleichen Riemen angeordnetes vorauslaufendes Aufstauelement 1 greift in die Lücke zwischen den Wurstportionen 1, wobei in dem Fall, in dem z. B. mehrere Aufstauelemente 1a, 1b, 1c auf einem Riemen oder Riemenpaar 9, 6a, 6b (siehe Fig. 1) angeordnet sind.

Nachdem die Steuereinrichtung 16 das Wurstkaliber, die gewünschte Anzahl von Würsten pro Wurstgruppe, dem Abstand c zwischen den Einzelwürsten und auch die Position der Einzelwürste in Abhängigkeit der Zeit (beispielsweise über den Sensor 15 oder über Signale von vorhergehenden Vorrichtungen) sowie die baulichen Abmessungen, wie beispielsweise Länge l der Strecke in der die Aufstauelemente parallel zur Transporteinrichtung 3 verfahren werden können, d. h. des Riemenabschnitts der parallel zur Transporteinrichtung 3 verläuft, gepeichert hat, kann die Steuerung den Bewegungsablauf der Aufstauelemente 1a, 1b, 1c, 2a, 2b, 2c exakt berechnen und die Antriebe entsprechend ansteuern.

Der Vorteil dieser Lösung liegt unter anderem auch darin, dass die Reibung zwischen den Würsten 7 und der Transporteinrichtung 3 geringer ist als bei statischen Aufstauschiebern. Außerdem müssten die Portionen nach dem Bilden einer Wurstgruppe nicht auf dem Stillstand (wie beim statischen Aufstauen) auf V_{Transporteinrichtung} beschleunigt werden, was vor allem bei geraden Würsten oft zum Auseinanderrollen der Gruppe führt. Gemäß der Erfindung wird die vollständige Wurstgruppe 8 z. B. aus reduzierter Geschwindigkeit, mit der sich die Würste in Transportrichtung bewegen, z. B. aus halber Geschwindigkeit der Transporteinrichtung, durch äußere Kräfte auf die Geschwindigkeit der Transporteinrichtung beschleunigt und beruhigt, wobei die Wurstgruppe kompakt durch die an beiden Enden anliegenden Aufstauelemente 1, 2 zusammengehalten wird.

Eine zweite Variante entspricht im Wesentlichen dem in Fig. 3 gezeigten Ausführungsbeispiel, wobei hier zunächst die ersten Würsten einer Wurstgruppe 8 durch das erste Aufstauelement 1, das mit einer Geschwindigkeit V₁ < V_{Transporteinrichtung} läuft, z. B. mit halber Geschwindigkeit, aufgestaut werden. Dann bewegt sich das erste Aufstauelement 1 mit einer Geschwindigkeit V₁ = V_{Transporteinrichtung} weiter, so dass sich auch die ersten Würste der Wurstgruppe wieder mit einer entsprechend hohen Geschwindigkeit in Transportrichtung T bewegen können. Der zweite Teil der Wurstgruppe wird dann durch das zweite nachfolgende Aufstauelement 2, das sich mit einer Geschwindigkeit V₂ > V_{Transporteinrichtung} bewegt, von hinten zusammengeschoben. Weist die zusammengeschobene Wurstgruppe die Abmessung a auf, wie in VI der Fig. 3 gezeigt ist, erfolgt wie zuvor beschrieben eine Synchronfahrt zum Beruhigen der Wurstgruppe, wonach die Wurstgruppe 8 dann auslaufen kann.

Eine dritte Variante entspricht im Wesentlichen den vorhergehenden Varianten, wobei sich die Anzahl der zu einer Gruppe zusammenzuführenden Würste mit einer Geschwindigkeit V₁= V_{Transporteinrichtung} zwischen den eingefahrenen Aufstauelementen 1, 2 bewegt. Erst dann beginnt gleichzeitig das Aufstauen der vorderen Würste, indem das vordere Aufstauelement S1 mit einer Geschwindigkeit V₁ < V_{Transporteinrichtung} läuft, und gleichzeitig das nachfolgende zweite Aufstauelement 2 sich mit einer Geschwindigkeit V₂ > V_{Transporteinrichtung} bewegt, bis die Wurstgruppe entsprechend VI in Fig. 3 vollständig erzeugt ist.

Gemäß einer vierten Variante werden die Würste einer Wurstgruppe 8 nur durch ein Aufstauelement 1 aufgestaut, das sich mit einer Geschwindigkeit V₁ < V_{Transporteinrichtung} bewegt, wobei V₁ = 30 % bis 90 % der V_{Transporteinrichtung}, ohne von hinten zusammengeschoben zu werden.

Entsprechend einer fünften Variante werden die Würste einer Wurstgruppe 8 nur durch ein Aufstauelement von hinten zusammengeschoben, d. h. durch ein Aufstauelement, das sich mit einer Geschwindigkeit V₂ bewegt, wobei V₂ = 110 % bis 200 % von V_{Transporteinrichtung}, ohne durch einen Aufstauschieber, der sich am vorderen Ende der Wurstgruppe befindet, aufgestaut zu werden.

## Patentansprüche

1. Verfahren zum Gruppieren von Würsten (7) in Wurstgruppen (8) mit einer vorbestimmten Anzahl von Würsten-(7), wobei zueinander beabstandete Würste (7) quer zu ihrer Längsrichtung auf einer Transporteinrichtung (3) gefördert werden und durch mindestens ein Aufstauelement (1a, 1b, 1c, 2a, 2b, 2c) aufgestaut werden,
wobei mindestens ein Aufstauelement (1a, 1b, 1c, 2a, 2b, 2c) zum Gruppieren zumindest zeitweise in Transportrichtung (T) bewegt wird, **dadurch gekennzeichnet,**
**dass** zumindest zwei, unabhängig voneinander angetriebene Aufstauelemente (1a, 1b, 1c, 2a, 2b, 2c) die Würste (7) gruppieren und, dass zwei aufeinanderfolgende Aufstauelemente (1a, 1b, 1c, 2a, 2b, 2c) an jeweils unabhängig voneinander angetriebenen umlaufenden Förderteilen, insbesondere Förderriemen, befestigt sind und auf einer jeweiligen geschlossenen Bahn umlaufen.

2. Verfahren nach Anspruch 1, **dadurch gekennzeichnet, dass**
ein erstes Aufstauelement (1a, 1b, 1c, 2a, 2b, 2c) vor der ersten Wurst (7) einer Wurstgruppe (8₁) eingebracht wird und sich zumindest zeitweise mit einer Geschwindigkeit V₁ < V_{Transporteinrichtung} bewegt wird, und zusätzlich oder alternativ
ein nachfolgendes zweites Aufstauelement (1a, 1b, 1c, 2a, 2b, 2c) hinter der letzten Wurst (7) der Wurstgruppe (8₁) eingebracht wird und sich zumindest zweitweise mit einer Geschwindigkeit V₂ > V_{Transporteinrichtung} bewegt, wobei die Geschwindigkeit V_{Transporteinrichtung} die Geschwindigkeit der Transporteinrichtung (3) ist.

3. Verfahren nach mindestens einem der Ansprüche 1 bis 2, **dadurch gekennzeichnet, dass**, wenn der Abstand (a) zwischen dem ersten und zweiten Aufstauelement im Wesentlichen dem Produkt aus Wurstkaliber und Wurstanzahl pro Wurstgruppe entspricht, die Geschwindigkeiten (V₁, V₂) der beiden Aufstauelemente (1a, 1b, 1c, 2a, 2b, 2c) auf die Geschwindigkeit der Transporteinrichtung (3) eingestellt wird.

4. Verfahren nach mindestens einem der Ansprüche 1 bis 3, **dadurch gekennzeichnet, dass** nach dem Erzeugen der Wurstgruppe (8) das erste Aufstauelement, das in Transportrichtung vor der ersten Wurstgruppe (8₁) liegt, sich mit einer Geschwindigkeit V₁ > V_{Transporteinrichtung} angetrieben wird und aus dem Bereich, den die Wurstgruppen durchfahren, heraus bewegt wird und insbesondere
das zweite nachfolgende Aufstauelemente (1a, 1b, 1c, 2a, 2b, 2c), das in Transportrichtung hinter der letzten Wurst der ersten Wurstgruppe (8₁) liegt, auf eine Geschwindigkeit V₂ < V_{Transporteinrichtung} gebremst wird, um die nächste Wurstgruppe (8₂) zu erzeugen, wobei ein weiteres nachfolgendes Aufstauelement (1a, 1b, 1c, 2a, 2b, 2c) hinter der letzten Wurst der nachfolgenden Wurstgruppe (8₂) eingebracht wird.

## Claims

1. Method for collating sausages (7) to form sausage groups (8) having a predetermined number of sausages (7), where spaced sausages (7) are conveyed transverse to their longitudinal direction on a transport device (3) and accumulated by at least one accumulator element (1a, 1b, 1c, 2a, 2b,2c), wherein
said at least one accumulator element (1a, 1b, 1c, 2a, 2b, 2c) is for collating moved at least temporarily in the direction of transport (T), **characterized in that**
at least two independently driven accumulator elements (1a, 1b, 1c, 2a, 2b, 2c) collate said sausages (7) and **in that**
two successive accumulator elements (1a, 1b, 1c, 2a, 2b, 2c) are attached to respective individually driven revolving conveying members, in particular conveyor belts, and each revolve on a closed path.

2. Method according to claim 1, **characterized in that**
a first accumulator element (1a, 1b, 1c, 2a, 2b, 2c) is inserted upstream of said first sausage (7) of a sausage group (8₁) and at least temporarily moved at a velocity V₁ <Vₜᵣₐₙₛₚₒᵣₜ device, and additionally or alternatively,
a subsequent second accumulator element (1a, 1b, 1c, 2a, 2b, 2c) is inserted downstream of said last sausage (7) of said sausage group (8₁) and moved at least temporarily at a velocity V₂> V_{transport device}, where said velocity V_{transport device} is the velocity of said transport device (3).

3. Method according to at least one of the claims 1 to 2, **characterized in that,** when the distance (a) between said first and said second accumulator element substantially corresponds to the product of the sausage caliber and the number of sausages per sausage group, then velocities (V₁, V₂) of said two accumulator elements (1a, 1b, 1c, 2a, 2b, 2c) are set to the velocity of said transport device (3).

4. Method according to at least one of the claims 1 to 3, **characterized in that,** after creating said sausage group (8), said first accumulator element, in the direction of transport being disposed upstream of said first sausage group (8₁), is driven at a velocity V₁> V_{transport device} and is moved away from the region which said sausage groups pass and in particular
said second subsequent accumulator element (1a, 1b, 1c, 2a, 2b, 2c), in the direction of transport being disposed downstream of said last sausage of the first sausage group (8₁), is decelerated to velocity V₂ <V_{transport device} to create said next sausage group (8₂), where a further subsequent accumulator element (1a, 1b, 1c, 2a, 2b, 2c) is inserted downstream of said last sausage of said subsequent sausage group (8₂).

## Revendications

1. Procédé pour regrouper des saucisses (7) en groupes de saucisses (8) d'un nombre prédéterminé de saucisses (7), des saucisses (7) espacées mutuellement les unes des autres étant transportées transversalement à leur direction longitudinale, sur un dispositif de transport (3), et étant accumulées par retenue à l'aide d'au moins un élément de retenue d'accumulation (1a, 1b, le, 1d, 2a, 2b, 2c),
et au moins un élément de retenue d'accumulation (1a, 1b, le, 1d, 2a, 2b, 2c) étant, pour assurer le regroupement, déplacé au moins temporairement dans la direction de transport (T),
**caractérisé**
**en ce qu'**au moins deux éléments de retenue d'accumulation (1a, 1b, 1c, 1d, 2a, 2b, 2c) entraînés indépendamment les uns des autres, assurent le regroupement des saucisses (7), et **en ce que** deux éléments de retenue d'accumulation (1a, 1b, 1c, 1d, 2a, 2b, 2c) successifs sont fixés sur des pièces de transport en révolution, notamment des courroies de transport, respectivement entraînées indépendamment les unes des autres et en révolution sur une trajectoire fermée respective.

2. Procédé selon la revendication 1, **caractérisé en ce qu'**un premier élément de retenue d'accumulation (1a, 1b, 1c, 1d, 2a, 2b, 2c) est inséré à l'avant de la première saucisse (7) d'un groupe de saucisses (8₁), et est déplacé au moins temporairement avec une vitesse V₁<V_{dispositif de transport}, et en supplément ou en variante un deuxième élément de retenue d'accumulation (1a, 1b, 1c, 1d, 2a, 2b, 2c), suivant, est inséré derrière la dernière saucisse (7) du groupe de saucisses (8₁), et se déplace au moins temporairement avec une vitesse V₂>V_{dispositif} de transport, la vitesse V_{dispositif de transport} étant la vitesse du dispositif de transport (3).

3. Procédé selon l'une au moins des revendications 1 à 2, **caractérisé en ce que** lorsque la distance d'espacement (a) entre le premier et le deuxième élément de retenue d'accumulation correspond sensiblement au produit du calibre de saucisse par le nombre de saucisses par groupe de saucisses, on règle les vitesses (V₁, V₂) des deux éléments de retenue d'accumulation (1a, 1b, 1c, 1d, 2a, 2b, 2c) à la vitesse du dispositif de transport (3).

4. Procédé selon l'une au moins des revendications 1 à 3, **caractérisé en ce qu'**après la formation du groupe de saucisses (8), le premier élément de retenue d'accumulation, qui, en se référant à la direction de transport, se situe devant le premier groupe de saucisses (8₁), est entraîné avec une vitesse V₁>V_{dispositif de transport}, et est déplacé hors de la zone que traversent les groupes de saucisses, et **en ce que** notamment le deuxième élément de retenue d'accumulation (1a, 1b, 1c, 1d, 2a, 2b, 2c), suivant, qui, en se référant à la direction de transport, se situe derrière la dernière saucisse du premier groupe de saucisses (8₁), est alors freiné à une vitesse V₂<V_{dispositif de transport}, en vue de former le groupe de saucisses suivant (8₂), un autre élément de retenue d'accumulation (1a, 1b, 1c, 1d, 2a, 2b, 2c), suivant, étant inséré derrière la dernière saucisse du groupe de saucisses suivant (8₂).
